# EUROPEAN PATENT SPECIFICATION

(11) **EP 4 428 360 B1**
(45) Date of publication and mention of the grant of the patent: **27.05.2026**
(21) Application number: 24160340.6
(22) Date of filing: 28.02.2024
(51) Int. Cl.: F02M 37/00

(54) **SOLENOID VALVE FOR ENGINE CONTROL**
MAGNETVENTIL ZUR MOTORSTEUERUNG
ÉLECTROVANNE POUR COMMANDE DE MOTEUR

(30) Priority: 06.03.2023 JP 2023033541
(43) Date of publication of application: 11.09.2024
(73) Proprietor: Yamabiko Corporation, Ohme-shi, Tokyo 198-8760 (JP)
(72) Inventor: YAMAZAKI, Takahiro, Tokyo, 198-8760 (JP); ONUMA, Yuta, Tokyo, 198-8760 (JP); SAITO, Tamotsu, Tokyo, 198-8760 (JP); KUDO, Tomoyoshi, Tokyo, 198-8760 (JP); IMAI, Ryosuke, Tokyo, 198-8760 (JP)
(74) Representative: Zimmermann & Partner Patentanwälte mbB

(56) References cited:
- DE-A1- 102008 020 101
- DE-A1- 102012 211 575
- DE-B4- 10 162 754

## Description

### BACK GROUND OF THE INVENTION

The present invention relates to a solenoid valve for engine control.

A solenoid valve is used to control liquid flow. A typical example thereof is engine control, in which the solenoid valve is used to control of fuel supply to the engine body. The solenoid, as is well known, includes a valve seat and a movable valve element that advances and retreats by the action of an electromagnetic coil. When the movable valve element advances to be seated on the valve seat, a closed valve state is formed. On the other hand, when the movable valve element retreats to be separated from the valve seat, an open valve state is formed.

JP6218777 discloses a solenoid valve that keeps its sealing properties in the closed valve state by metal-to-metal pressure contact. To give an overview of the solenoid valve of JP6218777**,** the solenoid valve includes an electromagnetic coil, a plunger unit having a plunger, and a valve body. The valve body has a movable valve element advancing and retreating by the plunger, and a valve seat on/from which the movable valve element is seated/separated. JP6218777 describes that this solenoid valve is used for normally closed control.

Specifically, a valve member of the movable valve element is comprised of a metal ball. On the other hand, the valve seat is comprised of a circumferential edge of an outlet port of a valve chamber. From this configuration, the solenoid valve of JP6218777 is classified into a metal contact type solenoid valve. The metal ball is biased toward a closed valve state direction by a coil spring. When the plunger advances so that the metal ball is seated on the circumferential edge of the outlet port, the solenoid valve goes to the closed valve state. In this closed valve state, the metal ball is biased toward the closing direction by the coil spring, to thereby keep the sealing properties.

Among the metal contact type solenoid valves, a solenoid valve is known in which the valve member and a leaf spring make up a valve part of the movable valve element, while the valve seat is comprised of a flat surface around the outlet port or inlet port of the valve chamber. In this solenoid valve, the closed valve state is formed when the valve member is seated on the flat surface around the port. In this closed valve state, sealing properties are ensured by a spring force of the leaf spring.

JP-A-1996-312826 discloses a solenoid valve whose valve seat is comprised of a thick block-shaped elastic member, the block-shaped elastic member forming the fluid outlet port or inlet port. The closed valve state is achieved when a plunger advances to come into contact with the elastic member to consequently close the outlet port or inlet port comprised of the elastic member. The solenoid valve of JP-A-1996-312826 is a so-called elastic seal type solenoid valve. Since the block-shaped elastic member defines the outlet port or inlet port of a valve chamber, a higher molding precision of the elastic member is required. Since a solenoid valve for engine control is small-sized, the elastic member is a small component. This makes it troublesome to ensure the molding precision of the elastic member, i.e., the precision of the outlet port or inlet port. It is also difficult to keep the precision of the outlet port or inlet port of the valve chamber over time by the elastic member.
Document DE 10 2012 211575 A1 describes a valve for controlling a gaseous medium, particularly hydrogen. In preferred embodiments, a sealing element is arranged form-fit and with play. As a result, the sealing element is held in a form-fitting manner and yet there is still play so that the sealing element can move to a predetermined extent.
Document DE 101 62 754 B4 describes a valve for gas or fluid. A sealing bolt corresponding to a valve seat is provided within the circumferential area of an annular wall. The sealing bolt is attached to a magnetic anchor, which is designed as a disc-shaped plate anchor.
Document DE 10 2008 020101 A1 describes a valve for gaseous and liquid medium. A disc-shaped armature is located in a valve chamber, which is axially displaceable and carries a sealing body made of an elastomer material, which is coaxially vulcanized into the armature and closes the valve seat.

The metal contact type solenoid valve embraces a problem that sealing properties are difficult to secure. To secure the sealing properties, the movable valve element needs to be pressed against the valve seat with a strong force. This results in a problem of rendering it difficult to improve the valve opening responsibility and provide delicate aperture control.

Additionally, in the solenoid valve whose movable valve element is composed of the valve member and the leaf spring, the spring force of the leaf spring needs to be increased for securing the valve closing and sealing properties. Since these valve member and leaf spring are small components, a problem occurs that the production cost becomes high for enhancing the sealing properties while keeping the machining precision.

As described above, the elastic seal type solenoid valve renders it troublesome to secure the molding precision of the elastic member forming the outlet port or inlet port of the valve chamber, as well as making it difficult to keep the precision of the outlet port or inlet port over time.

### SUMMARY OF THE INVENTION

An object of the present invention is to not only provide a solenoid valve for engine control, easy to secure sealing properties while keeping the molding precision of the outlet port or inlet port of the valve chamber, but also provide a solenoid valve for engine control capable of improvement in valve opening responsibility and of delicate aperture control.

The above technical difficulties can be overcome by the present invention, which is set out in the appended set of claims. Aspects of the present invention provides a solenoid valve for engine control comprising:
a valve seat; and
a movable valve element that advances and retreats by action of an electromagnetic coil, the movable valve element advancing to be seated on the valve seat to thereby form a closed valve state, the movable valve element retreating to be separated from the valve seat to thereby form an open valve state, characterized in that
the valve seat is comprised of an elastic sealing member, the elastic sealing member being arranged around an outlet port or inlet port of a valve chamber (S), the elastic sealing member surrounding the outlet port or inlet port at a position radially apart from the outlet port or inlet port, wherein
the movable valve element presses the elastic sealing member, whereby the closed valve state is formed with sealing properties kept.

The solenoid valve of the present invention is capable of forming the closed valve state and securing the sealing properties during the valve closing state, by the elastic sealing member surrounding the outlet port or inlet port at a position spaced apart from the outlet port or inlet port. Since this elastic sealing member does not constitute the outlet port or inlet port, close attention need not be paid to the shape precision of the elastic sealing member. In addition, the solenoid valve of the present invention is capable of eliminating the above defects of the metal contact type and elastic seal type. According to the present invention, there is no need to press the movable valve element against the valve seat with a strong force as the metal contact type solenoid valve does. Thus, the present invention achieves improvement in valve opening responsibility of the solenoid valve and facilitates the delicate aperture control. In the preferred embodiment, the elastic sealing member is comprised of the O-ring.

Functions and effects and other objects of the present invention will become apparent from the following detailed description of a preferred embodiment of the present invention.

### BRIEF DESCRIPTION OF THE DRAWINGS

Fig. 1 shows a cross-sectional view of a solenoid valve of an embodiment;
Fig. 2 shows a cross-sectional view for explaining arrangement of an O-ring included in the solenoid valve of the embodiment;
Fig. 3 shows a schematic cross-sectional view for explaining relative dimensions of the O-ring included in the embodiment and a valve member constituting a valve part of a movable valve element;
Fig. 4 shows a schematic cross-sectional view related to Fig. 3, for explaining relative dimensions which may not necessarily be desirable of the O-ring and the valve member;
Fig. 5 shows a cross-sectional view related to Fig. 2, showing a variant of an elastic sealing member included in the embodiment;
Fig. 6 shows a diagram for explaining an example of application of the solenoid valve of the embodiment to a conventional 2-stroke engine; and
Fig. 7 shows a diagram for explaining an example of application of the solenoid valve of the embodiment to a stratified scavenging engine.

### DETAILED DESCRIPTION OF THE PRESENT INVENTION

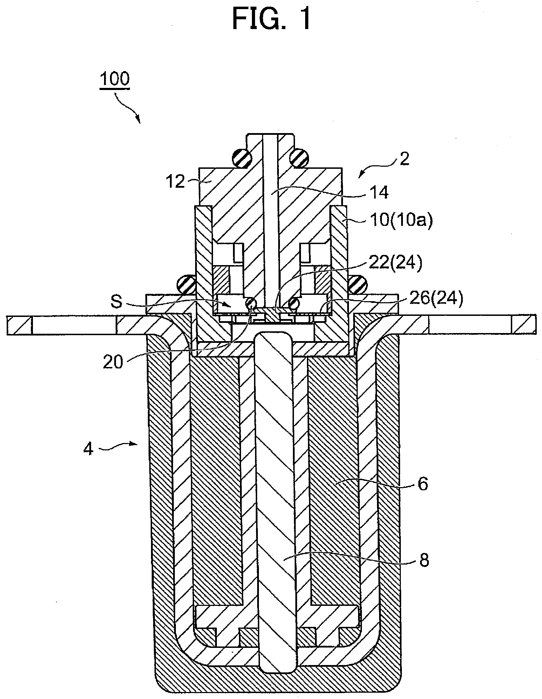

A preferred embodiment of the present invention will now be described with reference to the accompanying drawings. Fig. 1 shows a solenoid valve **100** of the embodiment. The solenoid valve **100** is used for fuel supply control of an engine (not shown). In Fig. 1, reference numeral **2** denotes a valve body and reference numeral **4** denotes an electromagnet unit. The electromagnet unit **4** includes an electromagnetic coil **6** and a core **8,** as in the past.

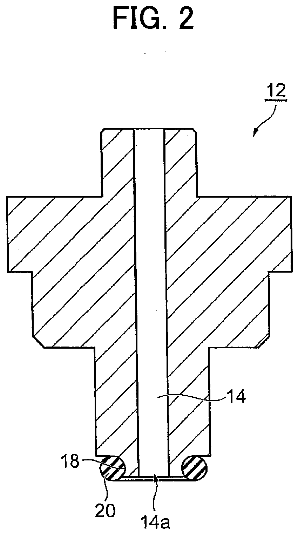

The valve body **2** has a valve chamber forming member **10** that forms a valve chamber **S,** and a passage forming member **12** that is securely fixed to a tubular part 10a of the valve chamber forming member **10,** the passage forming member **12** being made of a metal. Fig. 2 is an enlarged cross-sectional view of the passage forming member **12.** The passage forming member **12** has a fluid passage **14** extending from one end to the other end, the fluid passage **14** being made by drilling. An outlet port of the valve chamber **S** is consisted by an end **14a** (Fig. 2) of the fluid passage **14.** The passage forming member **12** has a circumferential groove **18** (Fig. 2) extending throughout the same circumference, with an O-ring **20** received in the circumferential groove **18** in intimate pressure contact. This can prevent the O-ring **20** from falling off unexpectedly. The O-ring **20** is a member constituting an "elastic sealing member" mentioned in the present invention and is a member constituting a "valve seat".

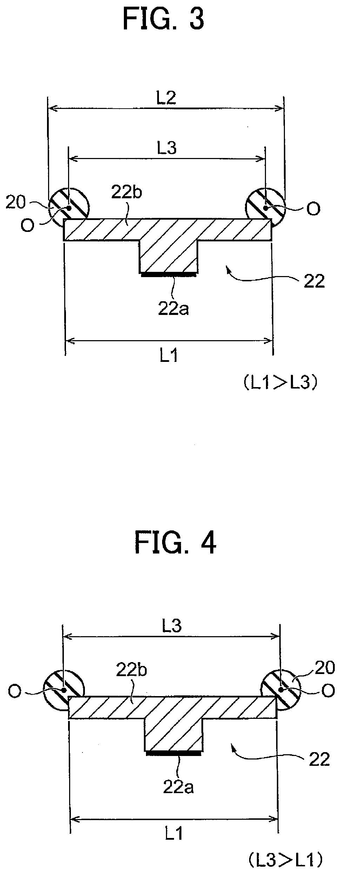

Referring to Fig. 1, reference numeral **22** denotes a valve member. The valve member **22** is arranged facing the outlet port **14a** and constitutes a valve part of a movable valve element **24.** The movable valve element **24** includes a leaf spring **26** supporting the valve member **22,** the leaf spring **26** biasing the valve member **22** in the direction toward the valve closing. The valve member **22** and the leaf spring **26** may be separate components or may be a single component obtained by integrating them. The valve member **22** includes an armature **22a** (Fig. 3, etc.). To avoid confusion in the diagram, the armature **22a** is not illustrated in Fig. 1. When the core **8** becomes magnetic by the action of the electromagnetic coil **6,** the armature **22a** is magnetized to be attracted by the magnetic force of the core 8 so that the valve member **22** is displaced in the direction away from the O-ring **20.** As a result, the solenoid valve **100** becomes open state. Conversely, when the core **8** is demagnetized, the valve member **22** presses the O-ring **20** by the biasing force of the leaf spring **26.** In consequence, the solenoid valve **100** becomes closed state.

As can be understood immediately from the above configuration by any person skilled in the art, since the position to keep the closed state is not restrictive in forming and holding the closed state, as in the metal contact type solenoid valve, the solenoid valve **100** of the embodiment can keep the closed state stably. As can easily been understood from the drawings, the O-ring **20** is not a member that defines the outlet port **14a** of the valve chamber **S.** As mentioned above, the outlet port **14a** consists of one end opening of the fluid passage **14** of the passage forming member **12.** Therefore, the fluid passage **14** can be formed by general machining, i.e., drilling. This enables the outlet port **14a** to be formed with a high level of machining precision, which does not change over time as the prior elastic member does.

Fig. 3 is a diagram for explaining a most preferred relationship between the valve member **22** and the O-ring **20.** The valve member **22** has a disk-shaped maximum diameter portion **22b** that constitutes a main part of the valve member **22,** the outer peripheral part of the disk-shaped maximum diameter portion **22b** pressing the O-ring **20** to thereby form the closed state. In Fig. 3, reference numeral **L1** denotes the diameter of the maximum diameter portion **22b.** Reference numeral **L2** denotes the outer circumferential diameter of the O-ring **20.** Reference numeral **L3** denotes the diameter of a center **O** in cross section cut through the O-ring **20.**

The diameter **L2** of the O-ring **20** is preferably a value greater than the diameter **L1** of the maximum diameter portion **22b.** Specifically, it is preferred to set the dimensions of the O-ring **20** so that the O-ring **20** deforms as follows when the outer peripheral part of the valve member **22** comes into pressure contact with the O-ring **20.** That is, when the valve member **22** comes into pressure contact with the O-ring **20** to form the closed state, as shown in Fig. 3, it is preferred that the O-ring **20** deform partially in cross-sectional shape into an L-shape along the outer circumferential edge portion of the valve member **22.** This deformation in cross-sectional shape of the O-ring **20** achieves improvement in the sealing properties.

Preferably, the outer circumferential diameter **L2** of the O-ring **20** is greater than the diameter **L1** of the maximum diameter portion **22b,** while the diameter **L3** of the center **O** in a cross section cut through the O-ring **20** is less than the diameter **L1** of the maximum diameter portion **22b.** This achieves restraint of deformation in cross-sectional shape of the O-ring **20** relative to the outer circumferential edge portion of the valve member **22** (disk-shaped maximum diameter portion **22b),** into proper L-shape in cross section.

In other words, referring to Fig. 4, if the diameter **L3** of the center **O** in a cross section cut through the O-ring **20** is set to a value greater than the diameter **L1** of the maximum diameter portion **22b,** the O-ring **20** may excessively bite into the outer circumferential edge portion of the valve member **22.** This excessive "bite-into" phenomenon makes it hard for the valve member **22** to disengage from the O-ring **20** when the valve is opened, which may worsen the responsibility when changing from the closed state to the open state.

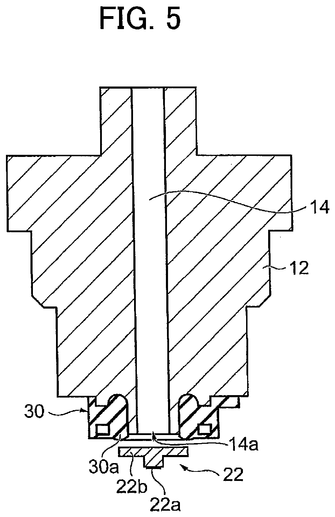

Fig. 5 is a diagram for explaining a variant of the elastic sealing member. Referring to Fig. 5, a seal rubber **30** is integrally molded with the passage forming member **12** that is a metal molding. The integrally molded seal rubber 30 has a sealing part **30a** that extends circumferentially continuously around the outlet port **14a** at a position radially outward apart from the outlet port **14a,** the sealing part **30a** protruding toward the valve member **22** with respect to the outlet port **14a.** The sealing part **30a** has a diameter allowing pressure contact of the outer peripheral portion of the valve member **22,** to constitute the valve seat. Preferably, similar to the O-ring **20** described above, the sealing part **30a** has a diameter allowing proper deformation in partial cross-sectional shape along the outer circumferential edge of the valve member **22.** The proper deformation in cross-sectional shape of the sealing part **30a** achieves improvement in the sealing properties without degrading the responsibility when changing from the closed state to the open state.

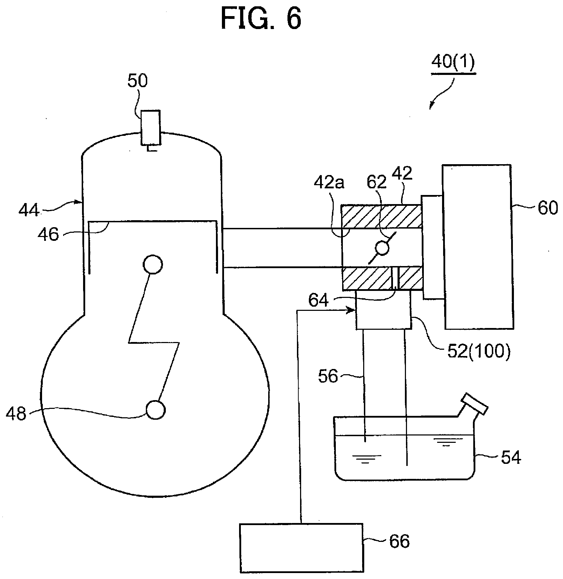

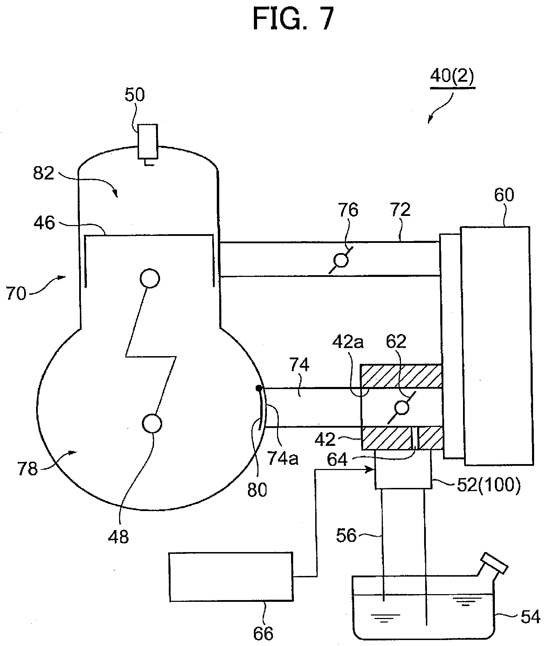

Typical examples of application of the solenoid valve **100** of the above embodiment and variant will be described with reference to Figs. 6 and 7. Figs. 6 and 7 illustrate examples of application of the solenoid valve **100** to a single cylinder 2-stoke engine **40** mounted on a working machine such as a brush cutter, a chainsaw or a small generator. Usage of the solenoid valve **100** preferably includes applying normally closed control to the solenoid valve **100.**

An engine **40 (1)** shown in Fig. 6 is a conventional engine in which air-fuel mixture generated by a carburetor **42** is supplied to an engine body **44.** In Fig. 6, reference numeral **46** denotes a piston, reference numeral **48** denotes a crankshaft, and reference numeral **50** denotes a spark plug.

Fuel is supplied from a fuel tank **54** to a fuel supply member **52** included in the carburetor **42.** Reference numeral **56** denotes a reflux pipe that returns fuel from the fuel supply member **52** to the fuel tank **54.**

The carburetor **42** is supplied with air purified by an air cleaner **60.** A mixture generation passage **42a** of the carburetor **42** has a throttle valve **62,** by which engine output is controlled. In the vicinity of the throttle valve **62,** the carburetor **42** has a fuel supply port **64,** to which controlled fuel is supplied from the fuel supply member **52.** The fuel supply port **64** may communicate with a venturi leading to the mixture generation passage **42a** or may be formed downstream (on the engine body side) of the carburetor **42.**

The fuel supply member **52** includes the solenoid valve **100** of the embodiment, by which fuel supplied to the fuel supply port **64** is controlled. The solenoid valve **100** is controlled by a controller **66.** The controller **66** generates a fuel supply control signal that controls opening of the solenoid valve **100** by a parameter such as engine rotation number.

An engine **40(2)** shown in Fig. 7 is a stratified scavenging engine. In description of the engine **40(2)** of Fig. 7, same elements as the elements included in the conventional engine **40(1)** of Fig. 6 are designated by the same reference numerals and will not therefore be described again. The stratified scavenging engine **40(2)** includes a leading air passage **72** supplying air purified by the air cleaner **60** to an engine body **70,** and a mixture passage **74** supplying air-fuel mixture generated by the carburetor **42** to the engine body **70.** The leading air passage **72** has a leading air control valve **76** that works in conjunction with the throttle valve **62.**

In the stratified scavenging engine **40(2),** as is well known, at the beginning of the scavenging process, air is supplied through the leading air passage **72** to the engine body **70,** and then air-fuel mixture is supplied through the mixture passage **74** to the engine body **70.** In the stratified scavenging engine **40(2)** shown, air-fuel mixture is supplied to a crankcase **78.** A reed valve **80** is arranged at an exit **74a** of the mixture passage **74** that opens to the crankcase **78.** As is well known, air-fuel mixture supplied to the crankcase **78** is pre-compressed within the crankcase **78** and then supplied through a scavenging passage (not shown) to a combustion chamber **82.** The scavenging passage is well known.

- **100**: solenoid valve of the embodiment
- **S**: valve chamber
- **12**: passage forming member
- **14**: fluid passage of passage forming member
- **14a**: outlet port of valve chamber
- **20**: O-ring (elastic sealing member)
- **22**: valve member
- **24**: movable valve element
- **26**: leaf spring
- **30**: integrally-molded seal rubber of variant of elastic sealing member

## Claims

1. A solenoid valve (100) for engine control comprising:
a valve seat (20, 30a); and
a movable valve element (24) that advances and retreats by action of an electromagnetic coil (6), the movable valve element (24) advancing to be seated on the valve seat (20, 30a) to thereby form a closed valve state, the movable valve element (24) retreating to be separated from the valve seat (20, 30a) to thereby form an open valve state, **characterized in that**
the valve seat (20, 30a) is comprised of an elastic sealing member, the elastic sealing member being arranged around an outlet port (14a) or inlet port of a valve chamber (S), the elastic sealing member surrounding the outlet port (14a) or inlet port at a position radially apart from the outlet port (14a) or inlet port, wherein
the movable valve element presses the elastic sealing member, whereby the closed valve state is formed with sealing properties kept; the solenoid valve (100) further comprising:
a) a circumferential groove (18) extending around the outlet port (14a) or inlet port of the valve chamber (S) throughout a circumference thereof, wherein
the elastic sealing member is comprised of an O-ring (20); and wherein
the O-ring (20) is received within the circumferential groove (18) in an intimate pressure contact state; or
b) a passage forming member (12) including the outlet port (14a) or inlet port of the valve chamber (S), wherein
the elastic sealing member comprises a seal rubber (30) integrally molded with the passage forming member (12).

2. The solenoid valve for engine control according to claim **1,** wherein
the movable valve element (24) is comprised of a valve member (22) and a leaf spring (26) supporting the valve member (22), and wherein
the valve member (22) is biased by the leaf spring (26).

3. The solenoid valve for engine control of claim **2,** wherein
when the closed valve state is formed by pressing the elastic sealing member by an outer peripheral part of the valve member (22), the elastic sealing member deforms in cross-sectional shape along an outer circumferential edge portion of the valve member (22).

## Patentansprüche

1. Magnetventil (100) zur Motorsteuerung, umfassend:
einen Ventilsitz (20, 30a); und
ein bewegliches Ventilelement (24), das durch die Wirkung einer elektromagnetischen Spule (6) vor- und zurückfährt, wobei das bewegliche Ventilelement (24) vorfährt, um auf dem Ventilsitz (20, 30a) aufzusetzen und dadurch einen geschlossenen Ventilzustand zu bilden, und das bewegliche Ventilelement (24) zurückweicht, um vom Ventilsitz (20, 30a) getrennt zu werden und dadurch einen offenen Ventilzustand zu bilden, **dadurch gekennzeichnet, dass**
der Ventilsitz (20, 30a) aus einem elastischen Dichtungselement besteht, wobei das elastische Dichtungselement um eine Auslassöffnung (14a) oder Einlassöffnung einer Ventilkammer (S) herum angeordnet ist, und das elastische Dichtungselement die Auslassöffnung (14a) oder Einlassöffnung an einer Position umgibt, die radial von der Auslassöffnung (14a) oder Einlassöffnung beabstandet ist, wobei
das bewegliche Ventilelement auf das elastische Dichtungselement drückt, wodurch der geschlossene Ventilzustand unter Beibehaltung der Dichtungseigenschaften gebildet wird; wobei das Magnetventil (100) ferner umfasst:
a) eine Umfangsnut (18), die sich um die Auslassöffnung (14a) oder Einlassöffnung der Ventilkammer (S) über deren gesamten Umfang erstreckt, wobei
das elastische Dichtungselement aus einem O-Ring (20) besteht; und wobei
der O-Ring (20) in der Umfangsnut (18) in einem engen Druckkontaktzustand aufgenommen ist; oder
b) ein Kanalausbildungselement (12), das die Auslassöffnung (14a) oder die Einlassöffnung der Ventilkammer (S) umfasst, wobei
das elastische Dichtungselement ein Dichtungsgummi (30) umfasst, der mit dem Kanalausbildungselement (12) integriert geformt ist.

2. Magnetventil zur Motorsteuerung nach Anspruch 1, wobei
das bewegliche Ventilelement (24) aus einem Ventilelement (22) und einer das Ventilelement (22) stützenden Blattfeder (26) besteht, und wobei
das Ventilelement (22) durch die Blattfeder (26) vorgespannt ist.

3. Magnetventil zur Motorsteuerung nach Anspruch **2,** wobei
wenn der geschlossene Ventilzustand dadurch hergestellt wird, dass das elastische Dichtungselement durch einen Außenumfangsabschnitt des Ventilelements (22) gedrückt wird, sich das elastische Dichtungselement in seiner Querschnittsform entlang eines äußeren Umfangsrandabschnitts des Ventilelements (22) verformt.

## Revendications

1. Électrovanne (100) de commande de moteur comprenant :
un siège de vanne (20, 30a) ; et
un élément de vanne mobile (24) qui avance et recule par l'action d'une bobine électromagnétique (6), l'élément de vanne mobile (24) avançant pour être placé sur le siège de vanne (20, 30a) et ainsi former un état fermé de vanne, l'élément de vanne mobile (24) reculant pour être séparé du siège de vanne (20, 30a) et ainsi former un état ouvert de vanne, **caractérisée en ce que**
le siège de vanne (20, 30a) est composé d'un organe d'étanchéité élastique, l'organe d'étanchéité élastique étant agencé autour d'un orifice de sortie (14a) ou d'un orifice d'entrée d'une chambre de vanne (S), l'organe d'étanchéité élastique entourant l'orifice de sortie (14a) ou l'orifice d'entrée en une position radialement éloignée de l'orifice de sortie (14a) ou de l'orifice d'entrée, dans laquelle
l'élément de vanne mobile appuie sur l'organe d'étanchéité élastique, selon laquelle l'état fermé de vanne est formé en conservant des propriétés d'étanchéité ; l'électrovanne (100) comprenant en outre :
a) une rainure circonférentielle (18) s'étendant autour de l'orifice de sortie (14a) ou de l'orifice d'entrée de la chambre de vanne (S) sur toute la circonférence de celle-ci, dans laquelle
l'organe d'étanchéité élastique est composé d'un joint torique (20) ; et dans laquelle
le joint torique (20) est reçu à l'intérieur de la rainure circonférentielle (18), dans un état de contact étroit à pression ; ou
b) un organe formant passage (12) incluant l'orifice de sortie (14a) ou l'orifice d'entrée de la chambre de vanne (S), dans laquelle
l'organe d'étanchéité élastique comprend un caoutchouc d'étanchéité (30) moulé d'un seul bloc avec l'organe formant passage (12).

2. Électrovanne de commande de moteur selon la revendication **1,** dans laquelle
l'élément de vanne mobile (24) est composé d'un organe de vanne (22) et d'un ressort à lames (26) supportant l'organe de vanne (22), et dans laquelle
l'organe de vanne (22) est sollicité par le ressort à lames (26).

3. Électrovanne de commande de moteur selon la revendication 2, dans laquelle
lorsque l'état fermé de vanne est formé par la pression de l'organe d'étanchéité élastique exercée par une partie périphérique externe de l'organe de vanne (22), la forme transversale de l'organe d'étanchéité élastique se déforme le long d'une portion de bord circonférentiel externe de l'organe de vanne (22).
